# EUROPEAN PATENT APPLICATION

(11) **EP 4 131 741 A1**
(43) Date of publication of application: **08.02.2023**
(21) Application number: 20929003.0
(22) Date of filing: 30.03.2020
(51) Int. Cl.: H02K 9/18, H02K 9/06

(54) **ROTARY ELECTRIC MACHINE AND AIR DEFLECTOR FOR ROTARY ELECTRIC MACHINE**

(71) Applicant: Weg Equipamentos Elétricos S/A, 89256900 Jaragua do Sul (BR)
(72) Inventor: SCHNEIDER POREPP, Guilherme, 89255-694 Jaraguá do Sul (BR)
(74) Representative: Cabinet Beaumont
(86) International application number: PCT/BR2020/050107
(87) International publication number: WO 2021/195724

(57) **Abstract**

The present invention relates to a rotary electric machine that comprises a housing (3) containing at least one stator (2) coupled magnetically to a rotor (1) and a heat exchanger (4) that generates a ventilating airflow (14), the machine comprising at least one internal fan (11) that aspirates at least some of the airflow (14) and at least one air deflector that directs the airflow to a coil head (13) of the stator, the air deflector (9) comprising a ring-shaped body with a first straight radial portion (91), a second straight axial portion (92) and an inclined portion (93), the inclined portion (93) forming an acute angle (α) with a plane parallel to the second straight axial portion (92).

## Description

### FIELD OF THE INVENTION

The present invention relates to the field of rotary electric machines having a ventilation circuit in which the flow of cooling air flows radially through the ends of the stator windings.

### BACKGROUND OF THE INVENTION

Electric machines are equipment used for the transformation of electrical energy into mechanical, in the case of motors, and vice versa, in the case of generators. They generally consist of four basic structures: the rotor, which is the rotary energized component, a static element called a stator, also energized, bearings responsible for joining the static and rotary parts and, finally, the housing, that constitutes not only the role of enclosure of the systems already mentioned, but promotes integration with other auxiliary systems. Auxiliary systems are considered to be those of excitation, cooling, lubrication, among others that may coexist with the main ones, depending on the construction and technical requirements of the equipment.

Both the stator and the rotor are generally composed of a stacked sheet pack containing grooves into which conductive elements, called windings, are inserted. These windings are energized, that is, electric current circulates in these components, and consequently, heat generation occurs by the Joule effect. This heat, when generated without any dissipation or ventilation mechanism, is harmful to the health of the electric machine, since the electric insulation components are mostly composite materials, with very limited resistance to continuous exposure to high temperatures. The maximum temperature supported is named thermal class temperature, which in general, for rotary electric machines, is about 155 °C.

The portion of the winding not contained within the grooves of the sheet pack is called coil head, whether of the rotor or of the stator. This region traditionally has a lack of uniformity in temperature distribution, since there are two portions with very different behaviors: the end opposite to the sheet pack, known as the "eye" of the winding (or the most extreme region of the coil head), commonly presents very low temperatures when compared to the portion known as the "imbricated" of the winding. This occurs because the imbricated region presents a large loss of load for the ventilation flow of the machine, due to the reduced area for air passage; on the other hand, the region of the eye, which offers a greater area for air passage, and consequently less loss of load, exhibits lower average temperatures. Also, in the imbricated region, there are two distinct behaviors: the windings innermost layer, which has a priority interface to the ventilation airflow, has lower temperatures than those experienced by the upper (outermost) layer of the winding.

Therefore, it is essential to use mechanisms that promote heat removal in this region and, mainly, that standardize the coil head temperature of rotary electric machines stators.

In this sense, one of the component solutions traditionally used for this purpose is the so-called air deflectors. This component is arranged between the stator coil head and the bearing closure cap or front/rear portion of the housing. Its main objective is to direct the ventilation flow from the heat exchanger towards the stator coil head. In this type of machine, the fluid used for cooling is air, which in turn can exchange the heat generated by the machine with a water radiator, for example. The cold fluid enters the interior of the machine with a certain speed, being suctioned by the internal fans mounted on the rotor, and is then directed by the air deflector to the area of interest which, as already explained, is traditionally the portion of the stator coil head.

In turbogenerators, that is, synchronous generators with wound rotor that operate at high rotation generating large associated amounts of electrical energy, the heat generated by the conductive elements is proportionally high. Therefore, it is necessary to optimize the ventilation circuit, what is often only possible with the aid of modeling and virtual prototyping tools, such as the case of numerical fluidic simulation software.

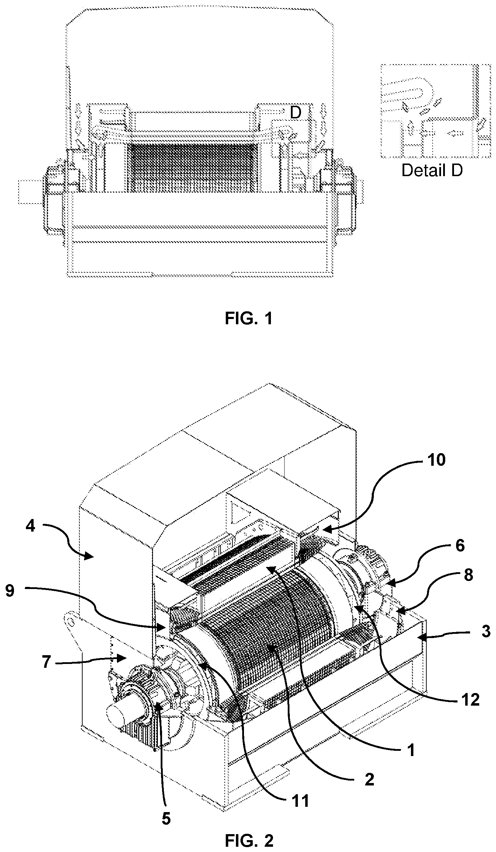

Figure 1 shows an example air deflector known from the state of the art. As best seen in "Detail D" of figure 1, the more traditional geometric shape of the internal air deflector applied to turbogenerators is a shape similar to an "L". The deflector is concentric to the internal fan of the machine and must be at a distance adjusted in relation thereto, especially in relation to the stator coil head, thus avoiding excessive gap between the components, creating a region with low loss of load that favors the ventilating airflow to pass through an undesired region.

Generally, the deflector is mounted relatively far from the stator coil head, mainly on the side of the stator connections, where the distance between the coil head and housing is greater to accommodate the connecting cables. In such cases, as close as the deflector is to the fan, a large preferred area remains for passage of the ventilation fluid through the region between the housing and the coil head, and not as would be desired, through the coil head, more specifically in its imbricated region. Consequently, this known solution results in low efficiency in thermal exchange and a large thermal gradient between the regions of the coil head.

Thus, the need for solutions that solve the problem of high flow on the external face of the coil head and that eliminate the need for adjustments in the length of the straight part of the internal deflector remains in the state of the art. There is also an absence of solutions that provide a single component or with as few components as possible, facilitating the assembly of the solution and the standardization of the component.

### OBJECTIVES OF THE INVENTION

It is one of the objectives of the invention to provide a rotary electric machine with an improved ventilation solution for the imbricated region of the coil head of the machine.

It is another objective of the invention to provide an air deflector which effectively directs air to the imbricated region of the coil head and that eliminates the need for adjustments in its axial portion.

Another objective of the invention is to provide an air deflector with simplified geometry, easy to manufacture, and which is modular, thus meeting a wide range of different designs.

### BRIEF DESCRIPTION OF THE INVENTION

The present invention achieves the above objectives by means of a rotary electric machine that comprises a housing containing at least one stator magnetically coupled to a rotor and a heat exchanger that generates a ventilating airflow, the machine comprising at least one internal fan that aspirates at least some of the airflow and at least one air deflector that directs the airflow to a coil head of the stator, wherein the air deflector comprises a ring-shaped body with a first straight radial portion, a second straight axial portion, and an inclined portion, the inclined portion forming an acute angle with a plane parallel to the second straight axial portion.

In a preferred embodiment of the present invention, the acute angle is greater than or equal to 30° and less than 90°.

Preferably, the first straight radial portion, second straight axial portion, and inclined portion are integrally formed.

In one embodiment of the present invention, the air deflector is formed as an integral body. Alternatively, the air deflector may be formed of a plurality of joined radial segments.

The inclined portion of the air deflector is preferably arranged at a distance between 15 mm and 25 mm from a most extreme region of the coil head.

### BRIEF DESCRIPTION OF THE DRAWINGS

The present invention will be described in more detail below, with references to the accompanying drawings, in which:
Figure 1 - is a lateral view of a rotary electric machine known from the state of the art, the machine being shown with a sectional cut removed, so as to allow visualization of the internal components, the detail D being shown in zoomed view;
Figure 2 - is a perspective view of the rotary electric machine according to an embodiment of the present invention, the machine being shown with a sectional cut removed, so as to allow visualization of the internal components;
Figure 3 - is a sectional lateral view of an air deflector according to an embodiment of the present invention, the detail A being shown in zoomed view;
Figure 4 - is a lateral view of the rotary electric machine according to an embodiment of the present invention, the machine being shown with a sectional cut removed, so as to allow visualization of the internal components;
Figures 5A and 5B - show zoomed views of detail E shown in figure 4;
Figure 6 - is a perspective view of the rotor of the electric machine according to an embodiment of the present invention, the rotor being shown with a sectional cut removed, so as to allow visualization of the components;
Figure 7 - is a schematic view in detail of two embodiments of the air deflector of the present invention;
Figures 8A and 8B - show perspective views of an embodiment of the air deflector of the present invention; and
Figures 9A to 9C - show perspective views of an embodiment of the air deflector of the present invention.

### DETAILED DESCRIPTION OF THE INVENTION

The present invention will be described below based on embodiments shown in figures 2 to 9.

Figure 2 shows a rotary electric machine comprising a stator (1) magnetically coupled to a rotor (2). The stator (1) is fixed to a housing (3), a heat exchanger (4) being preferably, but not exclusively, being mounted in its upper portion. The rotor (2) is mounted on front (5) and rear (6) bearing assemblies. The ends of the housing (3) are closed by covers (7, 8) equally arranged on the front and rear portions. For reference, the portion where the end of the main axis of the machine is located is considered front.

In addition, the internal portion of the rotary electric machine comprises two air deflectors (9, 10), mounted in interface with the internal portion of the housing (3) where the stator (1) is fixed, and two internal fans (11, 12), mounted in interface with the rotor (2).

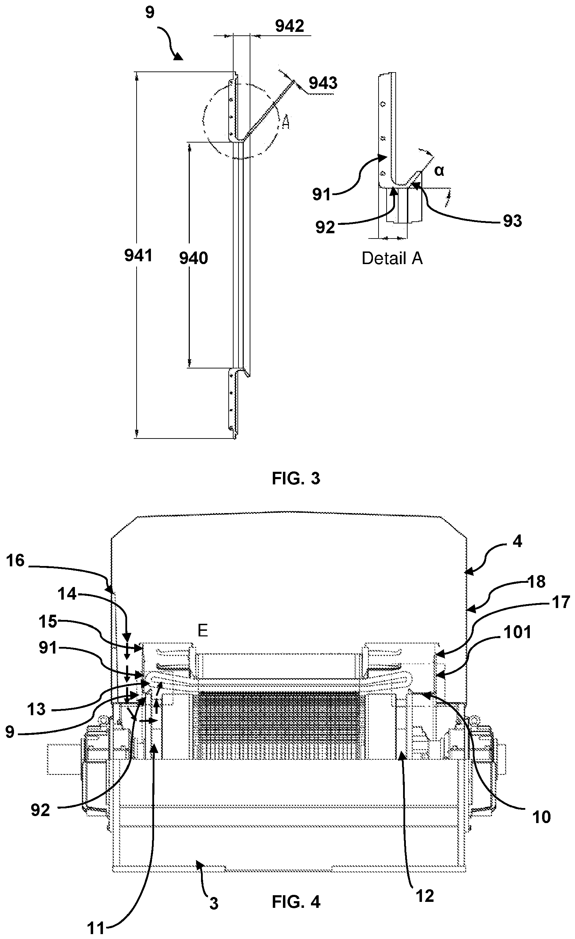

Figure 3 illustrates a cross-sectional lateral view of the air deflector (9) positioned on the front side of the machine. Of course, the person skilled in the art will understand that the sizing and use criteria are equally valid for the air deflector (10) positioned in the rear portion of the rotary electric machine.

The air deflector (9) according to the present invention comprises a ring-shaped body having essentially three parts: a first straight radial portion (91), a second straight axial portion (92), and an inclined portion (93). As can be seen in the figure, the inclined portion (93) makes an acute angle "a" with a plane parallel to the second straight radial portion (92).

The angle "a" is preferably less than 90° and greater than or equal to 30°, being limited only by the manufacturing process of the air deflector.

As shown in figure 3, the air deflector has an inner diameter (940), an outer diameter (941), and a full width (942), and the inclined portion (93) has a thickness (943) .

Figure 4 shows a sectional lateral view of the rotary electric machine, illustrating the positioning of the deflectors (9, 10) in the housing (3), which are axially positioned in the region between the front (16) and rear (18) closing sheets of the heat exchanger (4) and the stator coil head (13). In addition, the air deflectors (9, 10) must be positioned axially aligned with the fans (11, 12).

The first straight radial portion (91) of the front deflector interfaces with the inner fixing plate (15) of the housing (3), and aims to close the front region of the coil head (13) and direct the airflow (14) that enters the interior of the machine aspirated by the fan (11) to the winding region of interest. Another objective of the first straight radial portion (91) is to provide the radial dimension necessary for the correct positioning of the second axial portion (92).

The person skilled in the art will understand that the positioning of the rear air deflector is similar, with the straight radial portion (101) interfacing with the interior rear plate (17).

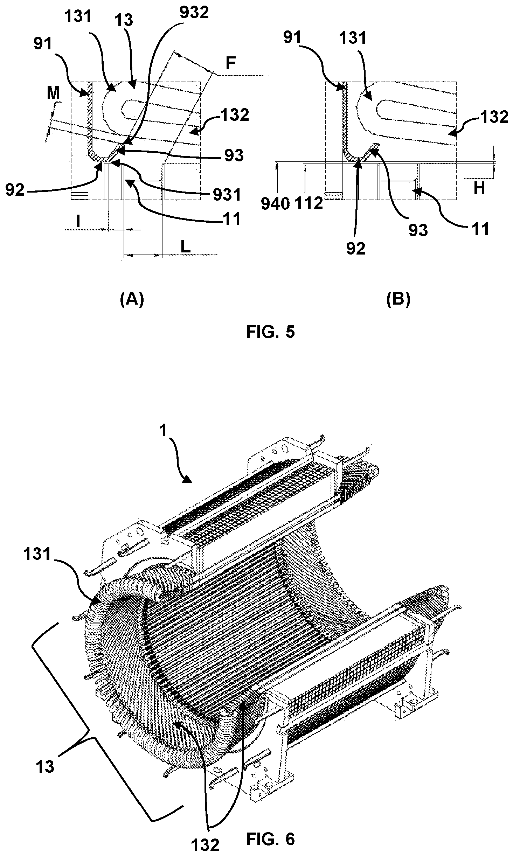

Figures 5A and 5B show zoomed views of detail E shown in figure 4. As shown in these figures, the inclined portion (93) protrudes from the end of the second straight axial portion (92), opposite to the first straight radial portion (91) of the air deflector (9). Thus, the inclined portion (93) directs the air aspirated by the fan to the imbricated region (132) of the coil head (13) of the stator (2) .

Figure 6 illustrates the stator (1) of the electric machine, with a sectional cut. As can be seen in this figure, the imbricated region (132) comprises the part of the winding that exits the package and has this name due to the overlap of the winding to form the winding assembly. The end of the coil head (13) on the other hand is called "eye" (131), and comprises the radius of curvature that the winding describes for lodging in suitable grooves. In this way, the airflow from the fan will be forced to pass through this imbricated region (132), where there is a smaller air passage area and, consequently, a higher temperature. In this concept, greater thermal use of the airflow (14) passing through the coil head (13) of the stator (1) is obtained, since the flow (14) is directed to the region that presents the greatest need for ventilation, reducing its average temperature and promoting greater thermal balance.

As can be seen in figures 5A and 5B, the positioning of the inclined portion (93) is dimensioned as a function of the position of the eye (131) of the coil head (13), with a minimum distance "M" in the radial direction, this distance preferably being between 15 mm and 25 mm, more preferably equal to 20 mm. The minimum distance "M" is limited by the rated line voltage of the electric machine, and will be as small as this voltage is, since in terms of ventilation, the smallest possible distance "M" is preferable. However, it is noteworthy that projects with a very small distance "M" can lead to the collision of the components during assembly and consequent breakage of the inclined projection (93). On the other hand, the use of a very large distance "M" leads to the loss of efficiency of the solution, since the airflow (14) will find a region with less head loss, and therefore will be configured as a preferred passageway.

Still as seen in figure 5A, the second straight axial portion (92) on the other hand is the region joining the first radial portion (91) to the inclined portion (93). Its longitudinal dimension must be such that it allows the beginning of the inclined portion (931) to be positioned at a distance "I" of at least 10 mm from the beginning of the fan blade (11).

This dimension must be met to ensure that the combination between the dimensions "a", "M" and "I" results in a minimum dimension "F" of 95% of the width of the fan blade "L" (11), thus allowing the largest possible portion of the airflow aspirated by the fan (11) to be directed to the imbricated region (132) of the coil head (13) of the stator (1). In addition, the combination "a", "M" and "I" must be such that the end (932) of the inclined portion (93) is aligned with the beginning of the eye region (131) of the winding.

Thus, the distance between the straight radial portion (91) and the end of the eye (131) of the coil head (13) ceases to be a critical factor for the temperature of the winding, since the portion that promotes the directing of the airflow against the imbricated region (132) is the region of the inclined portion (93).

As seen in figure 5B, radially the air deflectors (9, 10) must be positioned concentrically in relation to the internal fans (11) with a gap "H" between the components. This gap "H" shall be such as to prevent mechanical contact between the inner diameter (940) of the air deflector (9) and the outer diameter (112) of the inner fan (11) during operation of the rotary electric machine. The gap "H" has its minimum value determined by the manufacturing tolerances of the two components, their assembly tolerance and also the deflection of the rotor during its operation to avoid the rubbing of the surfaces. That is, it depends on the mounting tolerance between the air deflector (9) and the front plate of the heat exchanger, the manufacturing tolerance of the air deflector itself (9), the manufacturing tolerance of the fan (11) and its mounting tolerance with the rotor, and still on the contribution portion of the deflection of the static line of the rotor. Thus, the gap "H" may have a preferential value of 5 mm, limited to 8 mm.

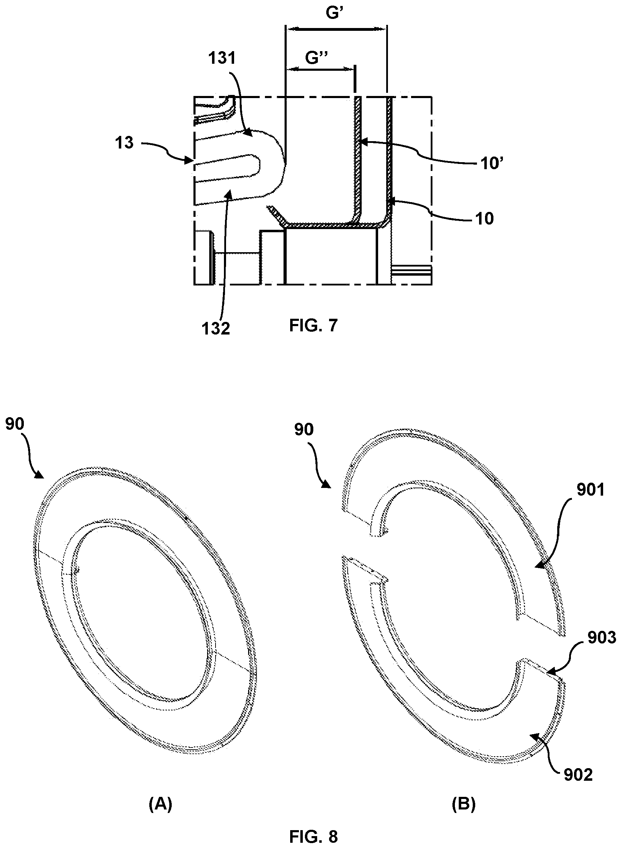

Figure 7 schematically illustrates that deflectors (10, 10') positioned at distances (G') and (G") from the eye (131) of the coil head (13) produce the same technical effect of directing the airflow to the imbricated region (132).

The air deflector (9) of the present invention is preferably integral in its transverse profile, i.e., the first straight radial portion (91), the second straight axial portion (92), and the inclined portion (93) are continuous, being manufactured together without the presence of splices, bolted, glued, welded or similar joints. This makes the component easier to manufacture and assemble as it eliminates the need for intermediate subassemblies before final assembly inside the rotary electric machine.

Alternatively, as shown in figures 8A and 8B, in an alternative embodiment, the air deflector (90) is split into two portions, or radial segments: an upper portion (901) and a lower portion (902), being joined against each other by means of flanges (903) arranged at the ends of the section. The portions are joined against each other by means of screwed, pinned, bonded, or any other form of union that allows future disassembly.

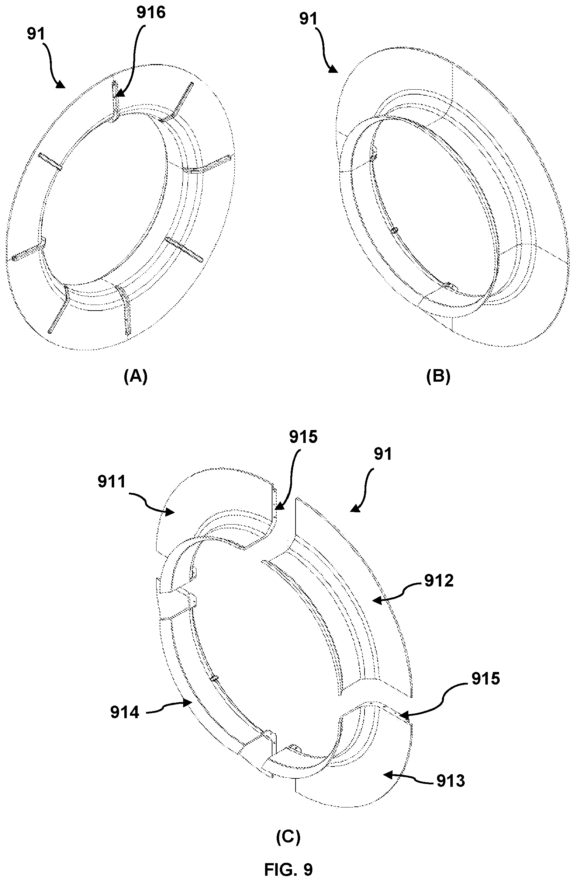

Figures 9A to 9C illustrate yet another embodiment of the air deflector of the present invention (91) which is divided into four radial segments (911, 912, 913, 914), all of which are analogously joined to the air deflector (90) by means of flanged screwed joints (915). The division into two, four, or as many parts as necessary depends on the combination of the various dimensions of the air deflector, being determined mainly by its inner diameter, outer diameter, total width, and thickness. The number of parts can facilitate assembly, as it avoids the manipulation of very large parts.

The air deflector (91) may further feature structural reinforcements (916) to increase the rigidity of the component. The need to use these reinforcements (916) also depends on the combination of the different dimensions of the air deflector, being mainly determined by its internal diameter, external diameter, total width, and thickness. The structural reinforcements may optionally be present regardless of the amount of segments forming it.

The air deflector of the present invention is manufactured in electrical insulating material, due to its proximity to the stator, an energized component. Preferably the air deflector should be manufactured in composite material, a possible composition being polyester resin matrix with fiberglass reinforcement.

As examples of preferred embodiments of the present invention have been described, it should be understood that the scope of the present invention encompasses other possible variations of the inventive concept described, being limited only by the content of the appended claims, including the possible equivalents.

## Claims

1. A rotary electric machine that comprises a housing (3) containing at least one stator (1) magnetically coupled to a rotor (2) and a heat exchanger (4) that generates a ventilating airflow (14), the machine comprising at least one internal fan (11) that aspirates at least some of the airflow (14) and at least one air deflector that directs the airflow to a coil head (13) of the stator, **characterized in that** the air deflector (9) comprises a ring-shaped body with a first straight radial portion (91), a second straight axial portion (92) and an inclined portion (93), the inclined portion (93) forming an acute angle (a) with a plane parallel to the second straight axial portion (92).

2. The machine of any of claims 1 to 4, wherein the acute angle (a) is greater than 30° and less than 90°.

3. The machine of claim 1, wherein the first straight radial portion (91), second straight axial portion (92) and inclined portion (93) are integrally formed.

4. The machine of claim 1 or 2, wherein the ring-shaped body is formed as an integral body.

5. The machine of claim 1 or 2, wherein the ring-shaped body is formed of a plurality of joined radial segments.

6. The machine of any one of claims 1 to 5, wherein the inclined portion of the air deflector (9) is arranged at a distance between 15 mm and 25 mm from the most extreme region of the coil head (13).

7. Air deflector (9, 10) for a rotary electric machine that comprises a housing (3) containing at least one stator (2) magnetically coupled to a rotor (1) and a heat exchanger (4) that generates a ventilating airflow (14), the machine comprising at least one internal fan (11) that aspirates at least some of the airflow (14) that is directed by the air deflector to a coil head (13) of the stator, the air deflector (9, 10) being **characterized in that** it comprises a ring-shaped body with a first straight radial portion (91), a second straight axial portion (92) and an inclined portion (93), the inclined portion (93) forming an acute angle (a) with a plane parallel to the second straight axial portion (92) .

8. The air deflector as claimed in claim 7, wherein the first straight radial portion (91), second straight axial portion (92) and inclined portion (93) are integrally formed.

9. The air deflector of claim 7 or 8, wherein it is formed as an integral body.

10. The air deflector of claim 7 or 8, wherein it is formed by a plurality of joined radial segments.
